# EUROPEAN PATENT APPLICATION

(11) **EP 1 247 457 A1**
(43) Date of publication of application: **09.10.2002**
(21) Application number: 02006386.3
(22) Date of filing: 21.03.2002
(51) Int. Cl.: A23L 1/217

(54) **A method of manufacturing potato crisps**

(30) Priority: 06.04.2001 GB 0108716
(71) Applicant: Frito-Lay Trading Company GmbH, 3001 Bern (CH)
(72) Inventor: Laxton, Maria Catherine Imelda, Frito-Lay Inc., Leicester, LE4 8BS (GB); Callan, Cliona Mary Geraldine, Frito-Lay Inc., Leicester, LE4 8BS (GB); Bladek, Jacek Krzysztof, Frito-Lay Inc., Leicester, LE4 8BS (GB)
(74) Representative: Frankland, Nigel Howard

(57) **Abstract**

A method of manufacturing potato crisps is disclosed comprising steps on preparing slices of potato and flying potato slices to create the crisps and subsequently applying a vegetable oil incorporating a colourant, such as a carotenoid, to enhance the colour of the crisps. The crisps have a final colouring which the Hunter Lab "B" value is in the range of 28 to 34 and thus present an appealing "golden" appearance.

## Description

**THE PRESENT INVENTION** relates to a method of manufacturing potato crisps, and crisps produced by the method.

Potato crisps are a popular snack item in the United Kingdom, although the same snack item is known in the U.S.A. and in some other countries as potato chips. In this Specification the snack item will be identified as potato crisps.

Potato crisps are prepared by frying thin slices of potato in hot oil. Typically the slices of potato are cooked until the moisture content of the slice is reduced to about 2% by weight or less.

While potato crisps which are simply fried in hot oil may have an oil or fat content of about 29 to about 44% by weight, various methods have been proposed to produce crisps which have a reduced oil content. Reference may be made, for example, to EP-A-0 456 747.

Crisps manufactured by prior proposed methods, regardless of whether they have a reduced oil content or not, generally have a pale colour which is dictated primarily by the particular variety of potato that is utilised, since a major factor in the final colour is the reducing sugar content of the potato. Further factors that influence the final colour of the crisps are the temperature and duration of the frying process.

The present invention seeks to provide an improved method for manufacturing crisps.

According to this invention there is provided a method of manufacturing potato crisps comprising the steps of preparing slices of potato and frying the potato slices to create the crisps, and subsequently applying a vegetable oil incorporating a colourant to the crisps to enhance the colour of the crisps.

Preferably, but not necessarily, after the frying step, and before applying said oil, the crisps are de-oiled and dehydrated. Thus the dehydrating may be effected before frying step.

Conveniently the oil is applied to the crisps by spraying.

The crisps may be on a conveyor when the oil is applied to the crisps, but it is presently preferred that the crisps should be in a rotating drum when the oil is applied to the crisps. If desired, the drum can be heated. The spraying may be atomised spraying, and the spraying may be electro-static spraying.

Preferably the colourant is a carotenoid colourant. Carotenoids are known as pro-vitamin A. It has been found that the application of an oil which contains a carotenoid colourant to the crisps may provide the crisps with a very desirable "golden" colour.

Whilst it is possible to use an oil to which a specific colourant, such as a carotenoid colourant, has been added, it is preferred to utilise an oil which naturally contains carotenoids. Thus, it is preferred to utilise an oil which comprises a palm oil which contains carotenoids. A typical palm oil which contains carotenoids may contain 400-500 ppm, or even up to 700ppm, of carotenoids, and in some cases the application of such high quantities of carotenoids to crisps provides crisps which have a too golden appearance. Thus it is preferred to use an oil which comprises a blend of palm oil, which contains carotenoids, and another vegetable oil.

The preferred concentration of carotenoids within the oil is between 20 and 250 ppm, and very acceptable results are obtained if a concentration of between 60 and 150 ppm is utilised.

It is preferred that in embodiments of the invention the oil is applied to the crisps to provide crisps having an enhanced final colour in which the Hunter Lab "b" value is in the range of 28-34, with the preferred range being 30-33, and the most preferred range being 31-32. With the Hunter Lab "b" value in the range of 31-32, the crisps have a very attractive golden appearance.

Preferably the Hunter Lab "L" value for the crisps is in the range of 58-72, and the Hunter Lab "a" value is in the range of -1.8 to 4.0.

It is to be understood that after the vegetable oil is applied, the crisps may be seasoned and packed in a conventional manner.

The invention relates to crisps whenever made by a method as described above.

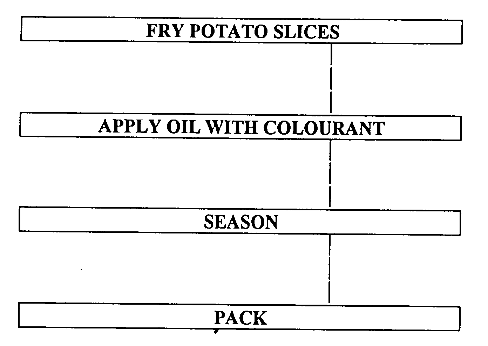

In order that the invention may be more readily understood, and so that further features thereof may be appreciated, the invention will now be described, by way of example, with reference to the accompanying figure which is a block diagram of a process in accordance with the invention.

A method for manufacturing crisps will now be described in which method steps are carried out to ensure that the crisps manufactured by the method have a desirable colour. The colour of the crisps will be described and defined with reference to the "Hunter Lab" colour classification system.

The Hunter Lab colour classification system is a uniform colour scale devised by Hunter in 1958 for use in a colour difference meter. The scale is based on the "opponent-colours" theory of vision. This theory indicates that there are six independent colour "dimensioned" which are perceived by three opponent colour systems namely black-white, red-green and yellow-blue. The Hunter Lab colour classification system is widely used in the food industry and typically values are measured using a colorimeter. The colorimeter illuminates a sample and measures reflected light, and values are calculated from the reflected light.

In the Hunter Lab scale every colour can be described by three values namely the "L" value the "a" value and the "b" value.

"L" is related to lightness and a value of L = 100 corresponds with white and a value of L = 0 corresponds with black.

The value "a" relates to the red-green scale. +a is red and -a is green. Similarly "b" relates to a blue-yellow scale with +b being equivalent to yellow and -b being equivalent to blue. A reference text for colour measurement is "The Measurement of Appearance" by Richard S. Hunter and Richard W. Harrold, 2nd Edition, Wiley, New York, 1987.

The Hunter Lab scale is a widely used scale and appropriate equipment, such as a tristimulus colorimeter can be obtained from HunterLab Corporation in most parts of the world.

It has been determined that the Hunter Lab "b" value of the colour of a crisp may be a significant factor taken into account by a person in determining the "desirability" of the crisp. The Hunter Lab "b" value can, within a specific range, be considered to measure the "goldeness" of the crisp, and it has been found that potential customers prefer crisps which are "golder" than many presently available crisps.

In a process for manufacturing crisps in accordance with the invention, thin slices of potato are fried to produce the crisps. The slices may simply be fried or the slices may be par-fried until the slices have a moisture content of between 4 and 10% weight percent, and those slice may subsequently be de-oiled and partially dehydrated, for example, with super-heated steam, to produce crisps having a moisture content of, for example, less than 2 weight percent based on the weight of the crisps. Thus a method of the type disclosed in EP-A-0 456 747 may be utilised, although it is to be understood that any appropriate method of fabricating the crisp may be utilised. Alternatively, in the par-frying stage the moisture content may be reduced to below 2%, for example to a level as low as 1.69%

The fabricated crisps may be passed to a sorter where defective crisps are removed.

In a subsequent method step, oil is applied to the crisps in such a way that a substantially even coating of oil is applied to the crisps. This application of oil may be effected in one of various different ways. For example, the crisps may be located on a conveyor, and the oil may be sprayed on to the crisps as they are conveyed by the conveyor. Alternatively the crisps may be inserted into a rotating drum, and oil may be sprayed into the drum. The spray may be a fine mist, and may be in the form of an atomised spray. The spraying process may be electro-statically assisted.

The spraying is effected so that the amount of oil applied to the crisps is 5% by weight or less. Preferably, however, a lower rate of application of oil is utilised, with the preferred amount of oil being no more than 2% by weight. An application of oil at a rate of 2% by weight of the crisps will give crisps that have a pleasant taste and which are not too oily. It is thought that if less than 1% by weight of oil is utilised, it will be difficult to achieve an even coating of oil on the crisps. The amount of oil sprayed is preferably such that the total oil content of the crisps is 36% or less. If the oil content is greater than 36% the crisps may be considered to taste too oily. If the total oil content is too low, the crisps may be considered to have an undesirable taste.

The oil that is used includes a colourant that is selected to provide an enhanced final colour, as will be discussed below. Thus, the oil enhances the "goldeness" of the crisps so that they are more golden than they would be if the oil was not applied to them.

Subsequently the crisps are passed to a seasoning apparatus which may consist of a drum and a mechanism to inject seasoning, in the form of powder, into the drum. The seasoning powder may be injected into the drum by being blown into the drum in an air-stream, or by being shaken into the drum off a vibrating plate.

Subsequently the crisps are packed.

The oil that is applied to the crisps is a vegetable oil which incorporates an appropriate colourant to provide the desired final enhanced colour for the crisps. The preferred colourant consists of one or more carotenoids.

Carotenoids are found in palm oil, and in such a palm oil there may be approximately 400 to 500 ppm of carotenoids, although in some palm oils there may be a carotenoid content of up to 700ppm. Thus, it is preferred to use palm oil, or a palm oil blend, as the oil that is to be applied to the crisps.

A preferred palm oil that may be utilised is a palm oil sold under the name of "Bergared 0" as sold by Berg & Schmidt GmbH & Co. of An Der Alster 81, D-20099, Hamburg, Germany. This oil is a naturally vitamin-rich palm oil which is a fully refined fractionated oil, and which is originally produced by Global Palm Product in Malaysia. However, other oils, including colourants such as carotenoids, may be used.

The oil may be diluted, as found to be appropriate, by being blended with another vegetable oil, the degree of dilution being such that, with the amount of oil applied to each crisp, the desired colour is achieved. The diluent oil may be colourless palm olein. It is envisaged that if the oil is blended, the minimum amount of palm oil in the blend will be 5%, with a carotenoid concentration of 20-25 ppm. The preferred blend is a 15-30% blend. Thus the preferred blend has a carotenoid content of from 60-150 ppm. The maximum blend presently envisaged is a 50% blend which has a carotenoid concentration of 200-250 ppm.

The oil may be such that the oil is not liquid at room temperature. If this is the case, the oil is kept in a fluid state by being maintained in a heat tank before it is applied to the crisps.

The desired colour for the crisps has a Hunter Lab "L" value within the range of 58-72, with the preferred value being 60.5-66.5. This value may be controlled by selecting an appropriate potato variety. The preferred colour also has a Hunter "a" value within the range of -1.8 to 4, and most preferably in the range of 0.5-2.9. Experience shows that this particular value is related to the "L" value, but both the "L" value and the "a" value are not absolutely critical in providing a desirable product.

It is preferred that the "b" value is within the range of 28-34, and preferably within the range of 30-33, the most preferred range being 31-32. The final "b" value will be controlled by the carotenoid level, but will be subject to the base colour of the crops.

It has been found that if a blended oil is used as described above, a 5% blend gives a "b" value of 29, a 15% blend gives a "b" of 31, a 30% blend gives a "b" value of 32 and a 50% blend gives a "b" value of 34.

As has been mentioned previously, the Hunter Lab "b" value can be considered to be a measure of the "goldeness" of the crisps. When previously crisps have been manufactured, it has been possible to provide crisps having a Hunter Lab "b" value of 28, but only if particular potato varieties, such as "Hermes" are used. It has not been practicable to obtain any higher value and, with many varieties of potato, only a lower value has been achievable.

The Hunter Lab "b" value of 34 relates to a crisp which has a very golden appearance. In the eyes of some people the crisp may appear to be too gold, and may thus look slightly artificial

In the preferred range of Hunter Lab "b" values of 31-32, the crisp has a very attractive golden appearance.

In the present specification "comprise" means "includes or consists of" and "comprising" means "including or consisting of'.

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of manufacturing potato crisps comprising the steps of preparing slices of potato and frying the potato slices to create the crisps, and subsequently applying a vegetable oil incorporating a colourant to the crisps to enhance the colour of the crisps.

2. A method according to Claim 1 wherein after the frying step, and before applying said oil, the crisps are de-oiled and dehydrated.

3. A method according to Claim 1 or 2 wherein the oil is applied to the crisps by spraying.

4. A method according to Claim 3 wherein the crisps are on a conveyor when the oil is applied to the crisps.

5. A method according to Claim 3 wherein the crisps are in a rotating drum when the oil is applied to the crisps.

6. A method according to any one of Claims 3 to 5 wherein the spraying is atomised spraying.

7. A method according to any one of Claims 3 to 6 wherein the spraying is electro-static spraying.

8. A method according to any one of the preceding Claims wherein the colourant is a carotenoid.

9. A method according to Claim 8 wherein the oil comprises a palm oil which contains carotenoids.

10. A method according to Claim 9 wherein the oil comprises a blend of the said palm oil and another vegetable oil.

11. A method according to any one of Claims 8 to 10 wherein the carotenoids are present in the oil with a concentration of up to 700 ppm.

12. A method according to Claim 11 wherein the concentration is between 20 and 250 ppm.

13. A method according to Claim 12 wherein the concentration is between 60 and 150 ppm.

14. A method according to any one of the preceding Claims in which the oil is applied to the crisps to provide crisps having an enhanced final colour in which the Hunter Lab "b" value is in the range of 28-34.

15. A method according to Claim 14 wherein the Hunter Lab "b" value is in the range of 30-33.

16. A method according to Claim 15 wherein the Hunter Lab "b" value is in the range of 31-32.

17. A method according to any one of the preceding Claims wherein the Hunter Lab "L" value for the crisps is in the range of 58-72, and the Hunter Lab "a" value is in the range of -1.8 to 4.0.

18. A method according to any one of the preceding Claims wherein, after the vegetable oil is applied, the crisps are seasoned and packed.

19. Crisps whenever made by a method according to any one of the preceding Claims.
